# EUROPÄISCHE PATENTANMELDUNG

(11) **EP 0 993 913 A1**
(43) Veröffentlichungstag der Anmeldung: **19.04.2000**
(21) Anmeldenummer: 99120225.0
(22) Anmeldetag: 09.10.1999
(51) Int. Cl.: B25J 9/12, B29C 45/42, B29C 45/76

(54) **Handhabungsvorrichtung an einer Kunststoffverarbeitungsmaschine**

(30) Priorität: 12.10.1998 DE 19846960
(71) Anmelder: Battenfeld GmbH, D-58540 Meinerzhagen (DE)
(72) Erfinder: Henze, Hans-Joachim, 57399 Kirchhundem (DE)

(57) **Zusammenfassung**

Die Erfindung betrifft eine Handhabungsvorrichtung (1) an einer Kunststoffverarbeitungsmaschine (2), insbesondere an einer Spritzgießmaschine, die aufweist: mindestens ein Handhabungselement (3) zum Eingriff in den Arbeitsbereich der Kunststoffverarbeitungsmaschine (2), mindestens einen Antriebsmotor (4), der das Handhabungselement (3) antreibt, mindestens eine zentrale Einspeisungseinheit (5) für die Versorgung des mindestens einen Antriebsmotors (4) mit Energie, mindestens eine zentrale Steuerungseinheit (6) zur Versorgung des mindestens einen Antriebsmotors (4) mit Steuerinformationen, wobei jedem des mindestens einen Antriebsmotors (4) ein Verstärker (7) zugeordnet ist, der den Antriebsmotor (4) mit Energie versorgt. Erfindungsgemäß ist vorgesehen, daß der Verstärker (7) in unmittelbarer Nahe des zugehörigen Antriebsmotors (4) angeordnet ist.

## Beschreibung

Die Erfindung betrifft eine Handhabungsvorrichtung an einer Kunststoffverarbeitungsmaschine, insbesondere an einer Spritzgießmaschine, die aufweist:
― mindestens ein Handhabungselement zum Eingriff in den Arbeitsbereich der Kunststoffverarbeitungsmaschine,
― mindestens einen Antriebsmotor, der das Handhabungselement antreibt,
― mindestens eine zentrale Einspeisungseinheit für die Versorgung des mindestens einen Antriebsmotors mit Energie,
― mindestens eine zentrale Steuerungseinheit zur Versorgung des mindestens einen Antriebsmotors mit Steuerinformationen,
wobei jedem des mindestens einen Antriebsmotors ein Verstärker zugeordnet ist, der den Antriebsmotor mit Energie versorgt.

Handhabungsvorrichtungen dieser Art sind im Stand der Technik bekannt. Insbesondere zwecks automatisierter Entnahme fertiger Formteile aus Spritzgießmaschinen weist die Vorrichtung ein Handhabungselement auf, das das Formteil greift. Ein oder mehrere Antriebsmotore treiben den Greifer an. Die Motore werden dabei bei den bekannten Ausführungen von einer zentralen Einspeiseeinheit mit Energie versorgt. Weiterhin existiert eine zentrale Steuerungseinheit, die den Motor mit Steuerinformationen versorgt; in der Regel handelt es sich bei den Motoren um Servomotoren. Jedem Antriebsmotor für die verschiedenen Achsen der Handhabungsvorrichtung ist dabei ein Verstärker zugeordnet, der den Motor mit Energie versorgt. Die Energieeinspeise- und die Steuereinheit sind dabei in einem zentralen Schaltschrank untergebracht.

Dabei wird eine sternförmige Verkabelung ausgehend vom Schaltschrank zu den Antriebsmotoren aus vorgenommen, d. h. jeder Motor wird separat mit der Signal- bzw. Steuerleitung sowie mit der Leistungsleitung vom zentralen Schaltschrank aus versorgt.

Dies hat die Folge, daß relativ großvolumige Schaltschränke erforderlich sind, die alle benötigten Bauelemente - also Leistungs- und Steuerungselektrik und -elektronik - aufnehmen können. Häufig sind zusätzliche Kühlaggregate notwendig, um die starke Wärmeentwicklung, insbesondere bei den Verstärkern, abzuführen.

Der Erfindung liegt daher die **Aufgabe** zugrunde, eine verbesserte Handhabungsvorrichtung zu schaffen, mit der es möglich ist, diese Nachteile zu vermeiden. Die Vorrichtung soll einerseits mit Schaltschranken geringerer Volumina auskommen und andererseits auf eine separate Kühleinrichtung verzichten können.

Die **Lösung** dieser Aufgabe durch die Erfindung ist dadurch gekennzeichnet, daß der Verstärker (7) in unmittelbarer Nähe des zugehörigen Antriebsmotors (4) angeordnet ist oder daß der Verstärker (4) integrierter Bestandteil des Antriebsmotors ist.

Vorzugsweise ist vorgesehen, daß die zentrale Einspeisungseinheit (5) und die zentrale Steuereinheit (6) in einem zentralen Schaltschrank (8) untergebracht sind.

Vorteilhafterweise ist angedacht, daß die Versorgung mehrerer Antriebsmotore (4) durch eine kombinierte Leistungs- und Informationsleitung (9) in einer Parallelschaltung erfolgt. Hierbei ist insbesondere vorgesehen, daß die parallelgeschaltete Leistungs- und Informationsleitung (9) als Feldbus-Leitung ausgeführt ist.

Nach der erfindungsgemäßen Idee wird die Versorgung - einerseits die Stromversorgung und andererseits die Datenversorgung - nunmehr nicht mehr zentral, sondern dezentral durchgeführt. Die Akkumulation der Verstärker im Schaltschrank ist nicht mehr erforderlich, weil sie in unmittelbarer Nähe der Motore angeordnet sind.

Insgesamt ergeben sich daraus die folgenden Vorteile:
- Die Verstärker können außerhalb des Schaltschrankes untergebracht werden, vorzugsweise direkt am zu steuernden Bauteil, also z. B. am Roboterarm.
- Bauteile werden somit aus dem Schaltschrank ausgelagert, so daß eine separate Kühlung nicht mehr erforderlich ist.
- Der Schaltschrank kann weiterhin in seiner Größe erheblich verringert werden (statt heute beispielsweise üblichen 800 x 400 x 1.400 mm kann eine Abmessung von 500 x 250 x 300 mm vorgesehen werden).
- Es sind nicht mehr so große Kabelbäume notwendig, da die Energie nicht mehr zentral für alle Motore aus dem Schaltschrank kommt.
- Der Schaltkasten kann als Einheit unmittelbar am Roboter angebracht werden.
- Es ist keine Schnittstellenabstimmung mit dem Kunden mehr notwendig, da nur noch die Stromversorgung definiert werden muß.
- Die Kosten für den apparativen Aufwand, für die Konstruktion und die Inbetriebnahme der Einheiten sinken damit entsprechend.
- Die Kundenfreundlichkeit der Anlage wird erhöht, da der große Schaltschrank fehlt.
- Da weniger Kabel als bisher bei der Roboterbewegung bewegt werden müssen, erhöht sich die Roboterverfügbarkeit.
- Die EMV-Emissionen werden verringert, da keine Konzentration der Verstärker auf engem Raum mehr notwendig ist, bezw. die bisher benötigten Leitungskabel zwischen Motor und Verstärker entfallen
- Die Anlage ist durch den einfacheren Aufbau resistenter gegen Störungen.

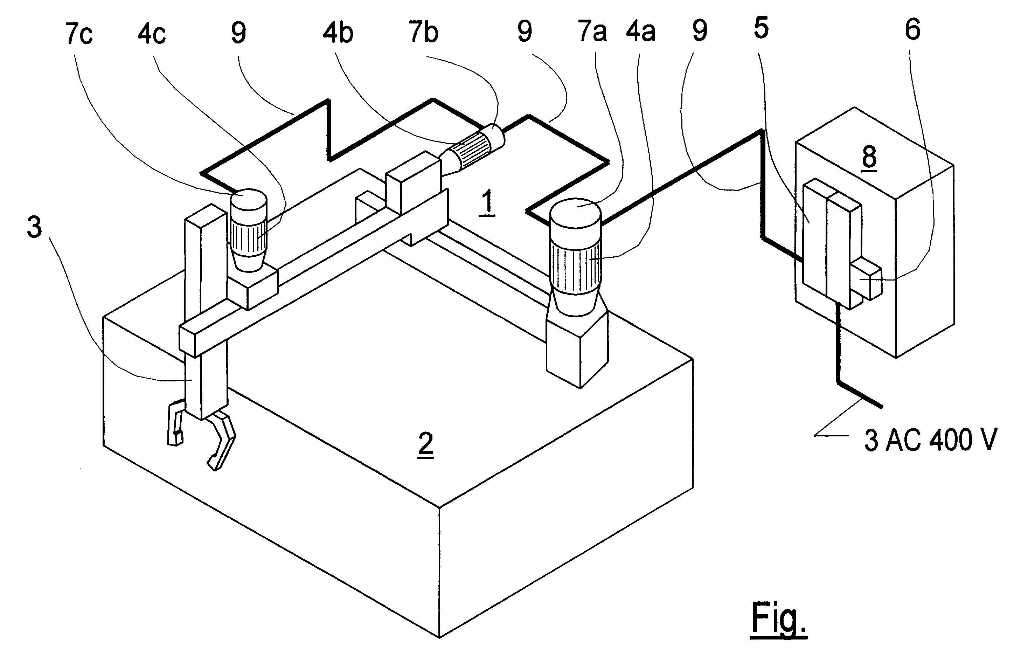

In der Zeichnung ist ein Ausführungsbeispiel der erfindungsgemäßen Vorrichtung dargestellt. Die Figur zeigt schematisch ein Robotersystem an einer nicht näher dargestellten Spritzgießmaschine.

Die Handhabungsvorrichtung 1 in Form eines Robotersystems ist vorgesehen, um beispielsweise gefertigte Spritzgieß-Formteile aus der Spritzgießmaschine 2 zu entnehmen. Hierfür hat der Roboter 1 ein Handhabungselement 3 (Greifelement), mit dem die zu entformenden Teile gegriffen werden können.

Da der Greifer 3 im Raum bewegt werden muß, sind insgesamt drei Antriebsmotore 4a, 4b und 4c vorhanden, die die verschiedenen Achsen in bekannter Weise bewegen. Jeder der Motore 4a, 4b und 4c steht über eine kombinierte Leistungs- und Informationsleitung 9 mit einer zentralen Einspeisungseinheit 5 für die Versorgung der Motore mit Energie in Verbindung. Die zentrale Einspeisungseinheit 5 ist in einem zentralen Schaltschrank 8 untergebracht. Dort befindet sich auch eine zentrale Steuerungseinheit 6 zur Versorgung der Motore 4a, 4b und 4c mit Steuerinformationen. Sowohl die Engergie bzw. die Informationen der Einspeiseeinheit 5 und der Steuereinheit 6 werden über die kombinierte Leistungs- und Informationsleitung 9 zu den Motoren 4a, 4b und 4c geleitet.

Erfindungswesentlich ist, daß die Verstärker 7a, 7b und 7c - die im Stand der Technik im Schaltschrank 8 untergebracht sind - in unmittelbarer Nähe des zugehörigen Motors 4a, 4b bzw. 4c angeordnet sind. Damit werden die oben erläuterten Vorteile erreicht.

Wenngleich die kombinierte Leistungs- und Informationsleitung 9 in der Figur den Eindruck erwecken kann, daß es sich um eine Reihenschaltung der einzelnen Motore handelt, liegt die Leistung an den einzelnen Verstärker doch parallel an. Dasselbe gilt für die Informationsleitungen: über diese erfolgt eine seriell/synchrone Datenübertragung.

### Bezugszeichenliste:

- 1: Handhabungsvorrichtung
- 2: Kunststoffverarbeitungsmaschine
- 3: Handhabungselement
- 4a, 4b, 4c: Antriebsmotore
- 5: zentrale Einspeisungseinheit für die Versorgung der Antriebsmotore 4 mit Energie
- 6: zentrale Steuerungseinheit zur Versorgung der Antriebsmotore 4 mit Steuerinformationen
- 7a, 7b, 7c: Verstärker
- 8: zentraler Schaltschrank
- 9: kombinierte Leistungs- und Informationsleitung

## Patentansprüche

1. Handhabungsvorrichtung (1) an einer Kunststoffverarbeitungsmaschine (2), insbesondere an einer Spritzgießmaschine, die aufweist:
― mindestens ein Handhabungselement (3) zum Eingriff in den Arbeitsbereich der Kunststoffverarbeitungsmaschine (2),
― mindestens einen Antriebsmotor (4), der das Handhabungselement (3) antreibt,
― mindestens eine zentrale Einspeisungseinheit (5) für die Versorgung des mindestens einen Antriebsmotors (4) mit Energie,
― mindestens eine zentrale Steuerungseinheit (6) zur Versorgung des mindestens einen Antriebsmotors (4) mit Steuerinformationen,
wobei jedem des mindestens einen Antriebsmotors (4) ein Verstärker (7) zugeordnet ist, der den Antriebsmotor (4) mit Energie versorgt,
**dadurch gekennzeichnet,**
daß der Verstärker (7) in unmittelbarer Nähe des zugehörigen Antriebsmotors (4) angeordnet ist oder daß der Verstärker (4) integrierter Bestandteil des Antriebsmotors ist.

2. Handhabungsvorrichtung nach Anspruch 1, dadurch gekennzeichnet, daß die zentrale Einspeisungseinheit (5) und die zentrale Steuereinheit (6) in einem zentralen Schaltschrank (8) untergebracht sind.

3. Handhabungsvorrichtung nach Anspruch 1 oder Anspruch 2, dadurch gekennzeichnet, daß die Versorgung mehrerer Antriebsmotore (4) durch eine kombinierte Leistungs- und Informationsleitung (9) in einer Parallelschaltung erfolgt.

4. Handhabungsvorrichtung nach Anspruch 3, dadurch gekennzeichnet, daß die parallelgeschaltete Leistungs- und Informationsleitung (9) als Feldbus-Leitung ausgeführt ist.
